## Europäisches Patentamt

## European Patent Office

## Office européen des brevets

(11) Veröffentlichungsnummer: **0 199 808**

**B1**

(12) **EUROPÄISCHE PATENTSCHRIFT**

(45) Veröffentlichungstag der Patentschrift:
**12.07.89**

(21) Anmeldenummer: **85905766.3**

(22) Anmeldetag: **01.11.85**

(86) Internationale Anmeldenummer:
**PCT/DE 85/00440**

(87) Internationale Veröffentlichungsnummer:
**WO 86/02813 (22.05.86 Gazette 86/11)**

(51) Int. Cl.⁴: **A 46 B 13/04**

(54) **MUNDPFLEGEGERÄT.**

(30) Priorität: **05.11.84 DE 3440836
31.05.85 DE 3520078
03.06.85 DE 3520261**

(43) Veröffentlichungstag der Anmeldung:
**05.11.86 Patentblatt 86/45**

(45) Bekanntmachung des Hinweises auf die Patenterteilung:
**12.07.89 Patentblatt 89/28**

(84) Benannte Vertragsstaaten:
**AT BE CH DE FR GB IT LI LU NL SE**

(56) Entgegenhaltungen:
**CA-A-730 840
CH-A-459 141
CH-A-468 806
DE-A-2 019 003
DE-A-3 313 848
DE-B-1 217 334
DE-C-524 182
FR-A-1 299 829
FR-A-1 405 404
GB-A-1 145 400
US-A-2 841 806
US-A-3 235 897
US-A-3 524 088
US-A-3 546 501
US-A-3 605 154
US-A-3 661 018**

(73) Patentinhaber: **MASER, Brigitte,
Hohenzollerndamm 50, D-1000 Berlin 33 (DE)**

(72) Erfinder: **KOBLISCHEK, Kurt, Hohenzollerndamm
50, D-1000 Berlin 33 (DE)**

(74) Vertreter: **Pfenning, Meinig & Partner,
Kurfürstendamm 170, D-1000 Berlin 15 (DE)**

(56) Entgegenhaltungen: (Fortsetzung)
**US-A-3 797 481**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft ein Mundpflegegerät gemäß dem Oberbegriff des Anspruchs 1.

Aus der DE-OS-3 036 781 ist ein Mundreinigungsgerät bekannt, das einen Griffteil umfaßt, an welchem eine Reinigungsbürste und eine Reinigungsdüse auswechselbar zu befestigen sind. Der Griffteil ist mit einem Antriebsstab versehen, über welchen an die daran befestigte Reinigungsbürste eine hin- und hergehende Drehbewegung vermittelt wird, während bei der Befestigung der Reinigungsdüse an demselben Antriebsstab über einen in ihm ausgebildeten Durchflußkanal Wasser durch ein Wasserzuleitungssystem zugeleitet wird, das bezüglich des Griffteils extern angeordnet ist. Die hin- und hergehende Drehbewegung des Antriebsstabes wird über einen Bewegungsumwandler durch einen Elektromotor des Griffteils vermittelt, der ausgeschaltet wird, sobald die Reinigungsdüse an dem Antriebsstab befestigt wird. Wenn die Reinigungsdüse an dem Antriebsstab befestigt ist, ist ein Elektromotor zum Antrieb einer Pumpe des Wasserzuleitungssystems eingeschaltet, so daß das Wasser pulsierend zu der Reinigungsdüse geleitet wird. Dieses bekannte Mundreinigungsgerät hat jedoch den Nachteil, daß es entweder nur die Funktion einer Zahnbürste oder nur die Funktion einer Munddusche besitzt. Die Reinigungsfunktion beruht somit nur auf einem reinen Bürstvorgang oder nur auf einem reinen Spülvorgang.

Aus der Internationalen Patentanmeldung WO 84/02453 ist ein Zahnreinigungsgerät mit elektrischem Antrieb, mit einem Antriebs- und Griffteil und mit einem Bürstenteil, welcher die von dem Antrieb bewegte, austauschbare Bürste trägt und bei dem über eine im Bereich der Borsten mündende Flüssigkeitsleitung Flüssigkeit zuführbar ist, bekannt. Hierbei ist die Bürste als um ihre Drehachse umlaufende mit der Stirnseite auf die Zähne aufzusetzende Hohlbürste mit kranzförmig angeordneten Borsten ausgebildet. Da bei diesem Gerät die Drehachse der Bürste senkrecht zur Zahnoberfläche verläuft, findet auf der einen Seite der Bürste der Bürstvorgang vom Zahnfleisch weg und auf der anderen Seite der Bürste zum Zahnfleisch hin statt. Dies läuft dem Bestreben, den Bürstvorgang stets und überall vom Zahnfleisch zu den Zähnen hin erfolgen zu lassen, zuwider. Insbesondere werden, wenn die Bürste mit der Hand entlang den Zähnen bewegt wird, diese abwechselnd zum Zahnfleisch hin und vom Zahnfleisch weg abgebürstet, so daß die mechanisch gelösten Speisereste und dergleichen auf diesen hin und her und gegebenenfalls auch zwischen Zahn und Zahnfleisch geschoben werden. Die Reinigungswirkung dieses Gerätes ist somit nicht befriedigend. Da die Drehachse der Bürste senkrecht zur Achse des Antriebs- und Griffteils liegt, sind außerdem spezielle Übertragungsmittel erforderlich, um die rechtwinklige Umlenkung der Drehachse zu realisieren.

Schließlich ist aus der FR-A-1 299 829 eine motorgetriebene Zahnbürste mit auswechselbarem Bürstenteil bekannt, bei der die Möglichkeit besteht, mittels einer nicht näher definierten, zwischen Motor und Bürstenteil eingefügten mechanischen Vorrichtung das Bürstenteil in beiden Drehrichtungen umlaufen zu lassen, wobei diese Bewegung kontinuierlich in einer dieser Richtungen oder auch alternierend zwischen beiden Richtungen erfolgen kann.

Weiterhin ist aus der DE-B-1 217 334 eine rotierend angetriebene Zahnbürste mit Reinigungsmittelzuführung bekannt, bei der der zylindrische hohle Handgriff von der Antriebswelle durchsetzt ist. Diese ist lösbar mit einer Welle im Bürstenkopf kuppelbar. Der Bürstenkopf und die Antriebswelle sind gleichachsig ausgebildet und die Borsten des Bürstenkopfes sind in Richtung von dessen Drehachse hintereinander und radial von dieser abstehend angeordnet. Durch den Bürstenkopf sind über Zuführungsleitungen gespeiste Kanäle für Mundbehandlungsmedien geführt, die im Borstenbereich in mehrere Öffnungen münden. Der Antrieb des Bürstenkopfes ist nur für eine kontinuierliche Drehung in gleicher Richtung ausgebildet.

Ausgehend von dem genannten Stand der Technik ist es daher die Aufgabe der vorliegenden Erfindung, ein Mundpflegegerät mit einem drehbaren Bürstenteil und einem mit diesem über eine drehbare Welle verbundenen Griffteil, der eine Antriebsvorrichtung für die Erzeugung der Drehbewegung des Bürstenteils enthält, sowie mit einer Flüssigkeitsleitung, die im Bereich des Bürstenteils in eine oder mehrere Öffnungen mündet für den Austritt von unter Druck durch die Flüssigkeitsleitung geführter Flüssigkeit, wobei das Bürstenteil und die Welle gleichachsig ausgebildet und die Borsten des Bürstenteils in Richtung von dessen Drehachse hintereinander und radial von dieser abstehend angeordnet sind, zu schaffen, bei dem die Vorrichtung zur wahlweisen Übertragung einer kontinuierlichen Drehbewegung oder einer definierten hin- und hergehenden Schwenkbewegung auf das Bürstenteil in konstruktiv einfacher und zuverlässiger Weise ausgebildet ist.

Diese Aufgabe wird erfindungsgemäß gelöst durch die im kennzeichnenden Teil des Anspruchs 1 angegebenen Merkmale. Eine vorteilhafte Ausbildung des erfindungsgemäßen Mundpflegegerätes ergibt sich aus Anspruch 2.

Die Erfindung zeichnet sich dadurch aus, daß die Antriebsvorrichtung ein Getriebe mit einer längsverschiebbaren Übertragungswelle aufweist, deren eines Ende einen exzentrischen Stift trägt, derart, daß der Stift unter Unterbrechung der Getriebeverbindung für die umlaufende Drehbewegung in Eingriff mit einem mit der drehbaren Welle verbundenen Betätigungselement bringbar ist.

In der Flüssigkeitsleitung ist vorteilhaft ein den Flüssigkeitsdurchfluß steuerndes, einstellbares Drosselorgan vorgesehen, das in Abhängigkeit vom jeweiligen Antriebszustand des Bürstenteils steuerbar ist. So kann beispielsweise eine Wasserzufuhr nur bei einer umlaufenden Rotation des Bürstenteils erfolgen, während sie bei der hinund hergehenden Schwenkbewegung gesperrt ist. Die Steuerung kann jedoch auch genau umgekehrt erfolgen.

Die Erfindung wird im folgenden anhand von den in den Figuren dargestellten Ausführungsbeispielen näher erläutert. Es zeigen:

Fig. 1 ein Mundpflegegerät gemäß einem ersten Ausführungsbeispiel mit einer Wasserzuführung durch die rotierende Welle zwischen dem Griffteil und dem Bürstenteil, und

Fig. 2 ein Mundpflegegerät gemäß einem zweiten Ausführungsbeispiel mit einer Wasserzuführung durch die den Bürstenteil teilweise abdeckende Schutzkappe.

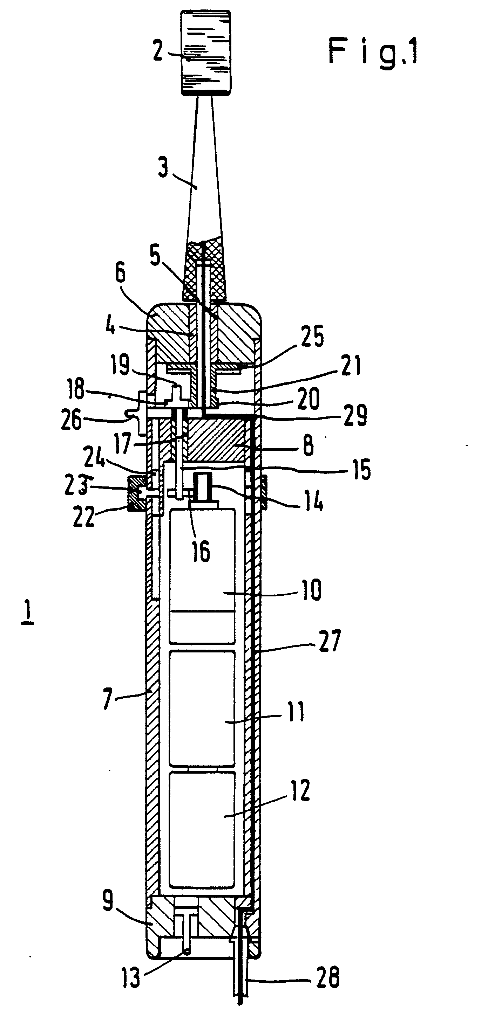

Die Fig. 1 zeigt ein Mundpflegegerät mit einem Griffteil 1 und einem Bürstenteil 2, die über eine Welle 3, die auf eine im Griffteil 1 drehbar gelagerte Zwischenwelle 4 aufgesteckt ist, miteinander verbunden sind. Das Bürstenteil 2 und die Welle 3 sind vorzugsweise einteilig ausgebildet. Die Zwischenwelle 4 wird in einer Hülse 5 geführt, die in das obere Endstück 6 des Griffteils 1 eingesetzt ist. Der Griffteil 1 besteht im wesentlichen aus einem rohrförmigen Mittelteil 7, einem in dieses eingesetzten Zwischenstück 8 sowie dem oberen Endstück 6 und einem unteren Endstück 9.

Zum Antrieb des Bürstenteils 2 über die Welle 3 und die Zwischenwelle 4 ist im Griffteil 1 ein Gleichstrommotor 10 vorgesehen. Dieser wird von zwei Akkumulatoren 11 und 12 gespeist, die über einen Stecker 13 mit einem Ladegerät verbunden werden können, so daß eine ständige Wiederaufladung möglich ist.

Die Welle des Gleichstrommotors 10 trägt ein Zahnrad 14, in das ein fest auf einer längsverschieblichen Welle 15 angeordnetes Zahnrad 16 eingreift. Die Welle 15 wird in einer Hülse 17 geführt, die fest in das Zwischenstück 8 eingesetzt ist. An ihrem oberen Ende trägt die Welle 15 ein weiteres Zahnrad 18 sowie einen in bezug auf die Wellenachse exzentrischen Stift 19. In der gezeigten Stellung der Welle 15 greift das Zahnrad 18 in ein Zahnrad 20 ein, das Teil einer auf der Zwischenwelle 4 fest angeordneten Buchse 21 ist. Wenn somit in dieser Stellung der Welle 15 der Gleichstrommotor 10 läuft, dann wird die Zwischenwelle 4 fortlaufend gedreht.

Zur Steuerung des Gleichstrommotors 10 trägt das Mittelteil 7 des Griffteils 1 einen in dessen Längsrichtung verschiebbaren Ring 22, in den ein Permanentmagnet 23 eingesetzt ist. Dem Permanentmagneten 23 gegenüber befinden sich innerhalb des Mittelteils 7 zwei Reedkontakte 24, die je nach der Stellung des Ringes 22 entweder beide geöffnet sind oder von denen jeweils einer geschlossen ist. Wenn einer der beiden Reedkontakte 24 geschlossen ist, liegt der Gleichstrommotor 10 an Spannung, wobei die Drehrichtung des Motors davon abhängt, welcher dieser beiden Kontakte geschlossen ist.

Die Buchse 21 trägt an ihrem oberen Ende einen Flansch 25, der an seiner Unterseite mit radial verlaufenden Schlitzen versehen ist. Die Welle 15 ist mit einem außerhalb des Mittelteils 7 angeordneten, in dessen Längsrichtung bewegbaren Schieber 26 fest verbunden. Durch entsprechende Betätigung des Schiebers 26 kann der exzentrische Stift 19 in einen Schlitz auf der Unterseite des Flansches 25 eingeführt werden. Gleichzeitig findet bei dieser Verschiebung eine Trennung der Zahnräder 18 und 20 statt. Die Zahnräder 14 und 16 bleiben hingegen im Eingriff, da das Zahnrad 14 eine entsprechende Länge aufweist. Bei einer Drehung der Welle 15 führt daher die Zwischenwelle 4 hin- und hergehende Schwenkbewegungen aus. Der von der Schwenkbewegung erfaßte Winkelbereich ist in erster Linie davon abhängig, wie weit der Stift 19 gegenüber der Mittelachse der Welle 15 versetzt ist.

Die Antriebsvorrichtung für die Welle 3 bzw. das Bürstenteil 2 ist somit derart ausgebildet, daß eine umlaufende Drehbewegung in beiden Richtungen sowie eine oszillierende Bewegung durchgeführt werden kann.

Durch das Mittelteil 7 ist eine Bohrung 27 geführt, in die ein Wasserleitungsrohr eingesetzt sein kann oder die selbst zur Wasserführung dient. Das Endstück 9 ist so ausgebildet, daß eine externe Wasserleitung 28 flüssigkeitsdicht an ihm angeschlossen werden kann. Dieser Anschluß erfolgt vorzugsweise über eine Steckverbindung. Das Endstück 9 ist dabei so gestaltet, daß eine Verbindung zwischen der Bohrung 27 im Mittelteil 7 und der Wasserleitung 28 besteht.

Oberhalb des Zwischenstücks 8 wird das Wasserleitungsrohr aus der Bohrung 27 herausgeführt und so umgelenkt, daß es in eine zentrale Bohrung der Zwischenwelle 4 führt. Hierbei ist der Übergang zwischen dem Wasserleitungsrohr 29 und der drehbaren Zwischenwelle 4 gegen Wasseraustritt abgedichtet. Für den Fall einer Undichtigkeit in diesem Bereich ist das Zwischenstück 8 zusätzlich wasserdicht in das Mittelteil 7 eingesetzt, so daß die Gefahr eines Wassereintritts in den den Gleichstrommotor 10 und die Akkumulatoren 11 und 12 enthaltenden Raum innerhalb des Griffteils 1 nicht gegeben ist.

Die Welle 3 enthält ebenfalls eine zentrale Bohrung, die, wenn die Welle 3 auf die Zwischenwelle 4 aufgesetzt ist, sich unter Abdichtung nach außen unmittelbar an die Bohrung der Zwischenwelle 4 anschließt. Im Bereich des Bürstenteils 2 befinden sich mehrere von der zentralen Bohrung der Welle 3 radial nach außen führende Öffnungen, durch die unter Druck in der zentralen Bohrung stehendes Wasser strahlenförmig aus dem Bürstenteil 2 austritt. Dieser Wasseraustritt kann gleichzeitig mit der Dreh- bzw. Schwenkbewegung des Bürstenteils 2 erfolgen.

Die Wasserleitung 28 ist vorzugsweise an die öffentliche Wasserversorgung angeschlossen. Hierzu besitzt sie an dem dem dargestellten entgegengesetzten Ende ein Anschlußstück, das an einen Wasserhahn angesetzt werden kann. Bei Öffnen dieses Hahnes strömt das Wasser durch die beschriebenen Leitungswege innerhalb des dargestellten Gerätes und tritt im Bereich des Bürstenteils 2 aus diesem aus. Um den Wasserzufluß regulieren zu können, besitzt das Gerät an geeigneter Stelle innerhalb des Leitungsweges ein einstellbares Drosselorgan, durch das der Durchlaßquerschnitt für das Wasser geändert werden kann. Dieses nicht gezeigte Drosselorgan ist in bekannter Weise, z. B. als Schieber oder dgl., ausgebildet. Es dient auch zur Regulierung des Drucks der aus dem Bürstenteil 2 austretenden Wasserstrahlen und kann die Wasserzuführung auch vollständig unterbrechen. Falls dies erwünscht ist, kann das Drosselorgan auch mit dem Ring 22 oder dem Schieber 26 gekoppelt sein, so daß ein Wasseraustritt nur dann stattfindet, wenn das Bürstenteil 2 in bestimmter Weise angetrieben wird.

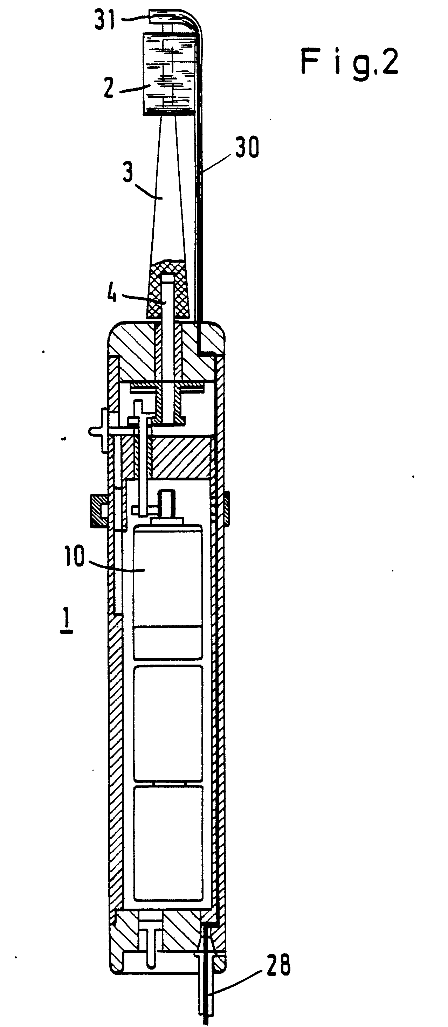

Die Ausführungsform des Mundpflegegerätes nach Fig.2 entspricht im wesentlichen der nach Fig. 1; es ist jedoch zusätzlich eine Schutzkappe 30 für das Bürstenteil 2 vorgesehen und die Wasserführung innerhalb des Gerätes ist geändert. Das Wasser wird hier nicht durch die Zwischenwelle und die Welle 3 geleitet, sondern durch die Schutzkappe 30 und tritt im Bereich des Bürstenteils aus dieser aus. Die Schutzkappe 30 umschließt das Bürstenteil 2 in dessen Umfangsrichtung mit einem Winkel von mindestens 180°. Sie bewirkt, daß die Borsten des Bürstenteils 2 nur mit der angrenzenden Zahnfläche und nicht mit den übrigen Bereichen der Mundhöhle in Berührung kommen. Außerdem verhindert sie, daß das Bürstenteil 2 eingeklemmt und in seiner Dreh- oder Schwenkbewegung beeinträchtigt wird. Das dem Griffteil 1 abgewandte Ende des Bürstenteils 2 ist zudem in der Schutzkappe 30 gelagert, so daß das Bürstenteil in radialer Richtung relativ stark belastet werden kann, ohne daß die Verbindung zwischen Zwischenwelle 4 und Welle 3 entsprechend stabil ausgebildet werden muß.

Das Wasserleitungsrohr innerhalb des Griffteils wird hier auch durch das obere Endstück 6 geführt und geht über in ein entsprechendes Wasserleitungsrohr innerhalb der Schutzkappe 30. Auch in der Schutzkappe kann das Wasserleitungsrohr durch eine einfache Bohrung gebildet werden. Die Schutzkappe 30 ist vorzugsweise vom Griffteil 1 abnehmbar, wobei die Verbindung wasserdicht ausgeführt ist. Es empfiehlt sich, durch eine starre Verbindung zwischen der Welle 3 und der Schutzkappe 30 diese gemeinsam vom Griffteil 1 abnehmbar und auf dieses aufsetzbar auszubilden. Wenn das Gerät von verschiedenen Personen benutzt wird, wechseln diese in der Regel nicht nur das Bürstenteil, sondern auch die Schutzkappe aus. Die gemeinsame Abnehmbarkeit von Bürstenteil 2 bzw. Welle 3 und Schutzkappe 30 erhöht daher den Bedienungskomfort des Gerätes.

Am Ende des Wasserleitungsrohres in der Schutzkappe 30 befindet sich eine Scheibe 31, die mehrere düsenartig ausgebildete Öffnungen aufweist, durch die das Wasser strahlenförmig austritt. Die Richtung dieser Öffnungen kann in gewünschter Weise vorgegeben werden, beispielsweise derart, daß die Wasserstrahlen nicht genau senkrecht zur Achse der Welle 3 austreten, sondern zum Bürstenteil 2 hin geneigt sind. Es ist auch möglich, die Öffnungen für den Wasseraustritt an anderen Stellen der Schutzkappe 30 vorzusehen als am dem Griffteil 1 gegenüberliegenden Ende des Bürstenteils 2. Die Öffnungen sollten jedoch stets so ausgebildet sein, daß die Wasserstrahlen in unmittelbarer Nähe der gerade durch das Bürstenteil 2 behandelten Zahnflächen auftreffen.

Anstelle eines Anschlusses der Wasserleitung 28 an die öffentliche Wasserversorgung kann deren dem Griffteil 1 abgekehrtes Ende auch in einen einen Wasservorrat enthaltenden Behälter eingetaucht werden. Es ist dann jedoch erforderlich, daß das Mundpflegegerät eine Pumpe in Form eines Flügelrades od.dgl. enthält, die ebenfalls vom Gleichstrommotor 10 angetrieben wird, um das Wasser zu den Austrittsöffnungen im Bürstenteil oder in der Schutzkappe 30 zu befördern. Diese Pumpe kann auch vorgesehen sein, wenn ein Anschluß an die Öffentliche Wasserversorgung besteht. Sie wird in diesem Fall vorzugsweise nur dann eingeschaltet, wenn der Druck des zugeführten Wassers nicht ausreichend ist, um mit der erforderlichen Geschwindigkeit aus den Öffnungen im Bürstenteil oder in der Schutzkappe auszutreten. Diese Steuerung der Pumpe kann auch selbsttätig in Abhängigkeit vom Wasserdruck erfolgen.

Schließlich ist es auch möglich, auf einen elektromotorischen Antrieb ganz zu verzichten und auch die Dreh- bzw. Schwenkbewegung des Bürstenteils nur durch Wasserkraft zu erzeugen. Hierzu ist ein Flügelrad od.dgl. vorgesehen, das von dem unter entsprechend hohem Druck aus der öffentlichen Wasserversorgung zu den Öffnungen im Bürstenteil bzw. in der Schutzkappe strömenden Wasser angetrieben wird.

**Patentansprüche**

1. Mundpflegegerät mit einem drehbaren Bürstenteil (2) und einem mit diesem über eine drehbare Welle (3) verbundenen Griffteil (1), das eine Antriebsvorrichtung für die Erzeugung der Drehbewegung des Bürstenteils (2) enthält, sowie mit einer Flüssigkeitsleitung, die im Bereich des Bürstenteils (2) in eine oder mehrere Öffnungen mündet für den Austritt von unter Druck durch die Flüssigkeitsleitung geführter Flüssigkeit, wobei das Bürstenteil (2) und die Welle (3) gleichachsig ausgebildet und die Borsten des Bürstenteils (2) in Richtung von dessen Drehachse hintereinander und radial von dieser abstehend angeordnet sind,
dadurch gekennzeichnet,

daß die Antriebsvorrichtung ein Getriebe mit einer längsverschiebbaren Übertragungswelle (15) aufweist, deren eines Ende einen exzentrischen Stift (19) trägt, derart, daß der Stift (19) unter Unterbrechung der Getriebeverbindung für die umlaufende Drehbewegung in Eingriff mit einem mit der drehbaren Welle (3) verbundenen Betätigungselement (25) bringbar ist.

2. Gerät nach Anspruch 1, dadurch gekennzeichnet, daß in der Flüssigkeitsleitung ein den Durchfluß bestimmendes, einstellbares Drosselorgan vorgesehen ist.

## Claims

1. Oral hygiene device having a rotary brush member (2) and a handle (1) connected thereto by a rotary shaft (3) that contains a driving arrangement for effecting rotation of the brush member (2) as well as a liquid conduit which opens in one or more apertures in the region of the brush member (2) for the outlet of liquid fed under pressure through the liquid conduit, in which the brush member (2) and the shaft (3) are formed on a common axis and the bristles of the brush member (2) are arranged one behind the other along their rotary axis and projecting radially therefrom, characterized in that the driving arrangement has a drive with a lengthwise-displaceable transmission shaft (15) of which one end carries an excentric pin so that the pin 19 can be brought into contact with an actuating member (25) connected with the rotary shaft (3), when the rotary driving connection is broken.

2. Device according to claim 1, characterised in that in the liquid conduit is provided an adjustable throttle member controlling the flow.

## Revendications

1. Dispositif de soins buccaux comprenant une brosse (2) tournante et un manche (1) unis au moyen d'un axe pivotant (3) associé à un dispositif d'entraînement permettant d'obtenir un mouvement de rotation de la brosse (2) et de former une conduite de liquide qui, dans la zone de la brosse (2) débouche par un ou plusieurs orifices pour l'écoulement du liquide transporté sous pression dans la conduite, la brosse (2) et l'axe (3) étant situés suivant le même axe, tandis que les poils de la brosse (2) sont disposés les uns derrière les autres dans le sens de l'axe de rotation de la brosse, et orientés radialement, caractérisé par le fait que le dispositif d'entraînement coopère avec un arbre de transmission (15) mobile longitudinalement, dont l'une des extrémités porte une broche excentrique (19) qui peut venir engrener avec un élément de commande (25) lié à l'axe pivotant (3), en rompant la liaison par engrenage créant le mouvement rotatif.

2. Dispositif suivant la revendication 1, caractérisé par le fait qu'il est prévu dans la conduite un élément de contrôle réglable qui détermine le débit.

Fig.1

Fig.2